(19) Europäisches Patentamt / European Patent Office / Office européen des brevets

(11) **EP 4 191 813 A1**

(12) **EUROPEAN PATENT APPLICATION**
published in accordance with Art. 153(4) EPC

(43) Date of publication:
**07.06.2023 Bulletin 2023/23**

(21) Application number: **21850460.3**

(22) Date of filing: **08.07.2021**

(51) International Patent Classification (IPC):
**H02J 3/32** (2006.01)     **H02J 3/38** (2006.01)
**H02J 13/00** (2006.01)

(52) Cooperative Patent Classification (CPC):
**H02J 3/32; H02J 3/38; H02J 13/00;** Y02B 70/30;
Y02E 40/70; Y02E 60/00; Y04S 10/12; Y04S 10/14;
Y04S 20/242

(86) International application number:
**PCT/JP2021/025841**

(87) International publication number:
**WO 2022/024708 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.07.2020 JP 2020128606**

(71) Applicant: **Kyocera Corporation
Kyoto-shi Kyoto 612-8501 (JP)**

(72) Inventors:
- **NAKAGAKI, Nodoka
  Kyoto-shi, Kyoto 612-8501 (JP)**
- **FURUKAWA, Takashi
  Kyoto-shi, Kyoto 612-8501 (JP)**
- **IWATA, Kei
  Kyoto-shi, Kyoto 612-8501 (JP)**

(74) Representative: **TBK
Bavariaring 4-6
80336 München (DE)**

(54) **ELECTRIC POWER MANAGEMENT SERVER, AND ELECTRIC POWER MANAGEMENT METHOD**

(57)     A power management server applies, when predetermined processing is applied to a power storage apparatus in all of two or more facilities, first processing to the power storage apparatus in one or more facilities included in the two or more facilities when an upper limit of adjustable power which is adjustable by controlling the power storage apparatus exceeds adjustment-requested power. The power management server applies, when the predetermined processing is applied to the power storage apparatus in all of the two or more facilities, second processing to the power storage apparatus in the one or more facilities included in the two or more facilities when a lower limit of the adjustable power falls below the adjustment-requested power. The predetermined processing is executed autonomously by the power storage apparatus. The first processing and the second processing are processing in which the controller sequentially controls the power storage apparatus.

FIG. 3

**Description**

TECHNICAL FIELD

The present disclosure relates to a power management server and a power management method.

BACKGROUND OF INVENTION

In recent years, to maintain a power supply-demand balance of a power grid, known techniques reduce the amount of power flow from a power grid to facilities. To maintain the power supply-demand balance of the power grid, a proposed technique controls discharging power of a power storage apparatus provided in each of two or more facilities such that a purchased power of two or more facilities is a target power.

Specifically, when power that can be adjusted by the discharging power of the power storage apparatus (hereinafter referred to as adjustable power) is greater than power to be adjusted to maintain the power supply-demand balance of the power grid (hereinafter referred to as adjustment-requested power), a power management server sequentially controls some facilities included in two or more facilities (see, for example, Patent Literature 1).

The charging operation of the power storage apparatus is not considered in the technique described above, failing to appropriately reduce the excess of the adjustment power (reduction power here).

CITATION LIST

PATENT LITERATURE

Patent Literature 1: International Patent Publication Pamphlet No. 2019/107435

SUMMARY

In a first aspect, a power management server includes a controller configured to adjust a power supply-demand balance of a power grid to which two or more facilities are connected by controlling a power storage apparatus provided in each of the two or more facilities. The controller applies, when predetermined processing is applied to the power storage apparatus in all of the two or more facilities, first processing to the power storage apparatus in one or more facilities included in the two or more facilities when an upper limit of adjustable power which is adjustable by controlling the power storage apparatus exceeds adjustment-requested power. The controller applies, when predetermined processing is applied to the power storage apparatus in all of the two or more facilities, second processing to the power storage apparatus in one or more facilities included in the two or more facilities when a lower limit of the adjustable power falls below the adjustment-requested power. The predetermined processing is executed autonomously by the power storage apparatus. The first processing and the second processing are processing in which the controller sequentially controls the power storage apparatus.

In a second aspect, a power management method includes adjusting, by a power management server, a power supply-demand balance of a power grid to which two or more facilities are connected by controlling a power storage apparatus provided in each of the two or more facilities. The adjusting includes applying, when predetermined processing is applied to the power storage apparatus in all of the two or more facilities, first processing to the power storage apparatus in one or more facilities included in the two or more facilities when an upper limit of adjustable power which is adjustable by controlling the power storage apparatus exceeds an adjustment-requested power and applying, when predetermined processing is applied to the power storage apparatus in all of the two or more facilities, second processing to the power storage apparatus in one or more facilities included in the two or more facilities when a lower limit of the adjustable power falls below the adjustment-requested power. The predetermined processing is executed autonomously by the power storage apparatus. The first processing and the second processing are processing in which the power management server sequentially controls the power storage apparatus.

BRIEF DESCRIPTION OF THE DRAWINGS

FIG. 1 is a diagram illustrating a power management system 100 according to an embodiment.
FIG. 2 is a diagram illustrating a facility 300 according to an embodiment.
FIG. 3 is a diagram illustrating a lower management server 200 according to an embodiment.
FIG. 4 is a diagram illustrating a local control device 360 according to an embodiment.

FIG. 5 is a chart for explaining applicable scenarios according to an embodiment.
FIG. 6 is a chart for explaining adjustable power according to an embodiment.
FIG. 7 is a chart for explaining the adjustable power according to an embodiment.
FIG. 8 is a diagram illustrating a power management method according to an embodiment.
FIG. 9 is a flowchart illustrating the power management method according to an embodiment.
FIG. 10 is a flowchart illustrating a power management method according to a variation 1.
FIG. 11 is a flowchart illustrating a power management method according to a variation 2.
FIG. 12 is a chart for explaining an update of a target value according to a variation 3.

DESCRIPTION OF EMBODIMENTS

Embodiments will be described below with reference to the accompanying drawings. Note that in the following description of the drawings, the same or similar components will be denoted by the same or similar reference signs. However, the drawings are schematic.

Embodiment

Power Management System

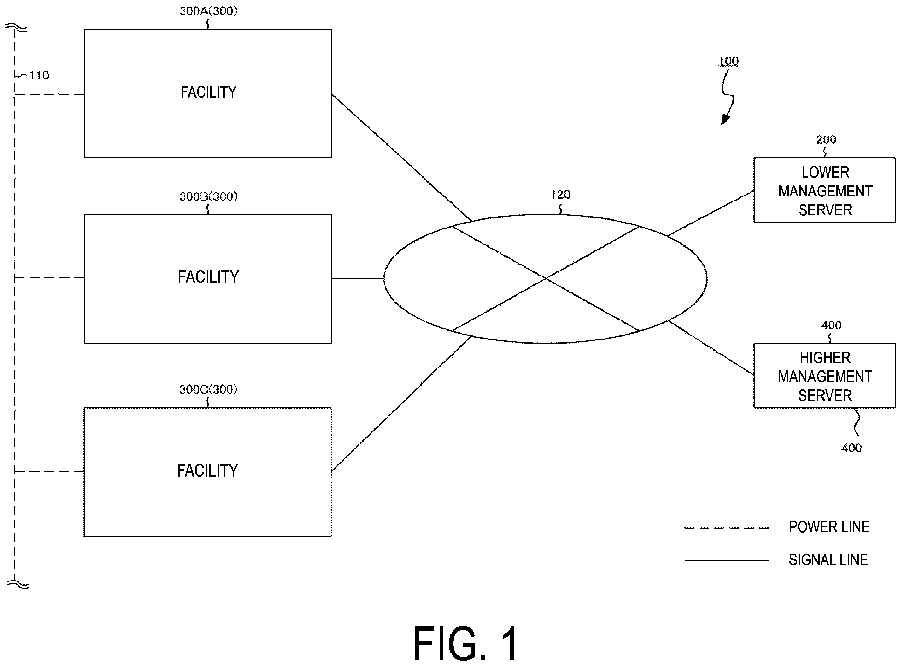

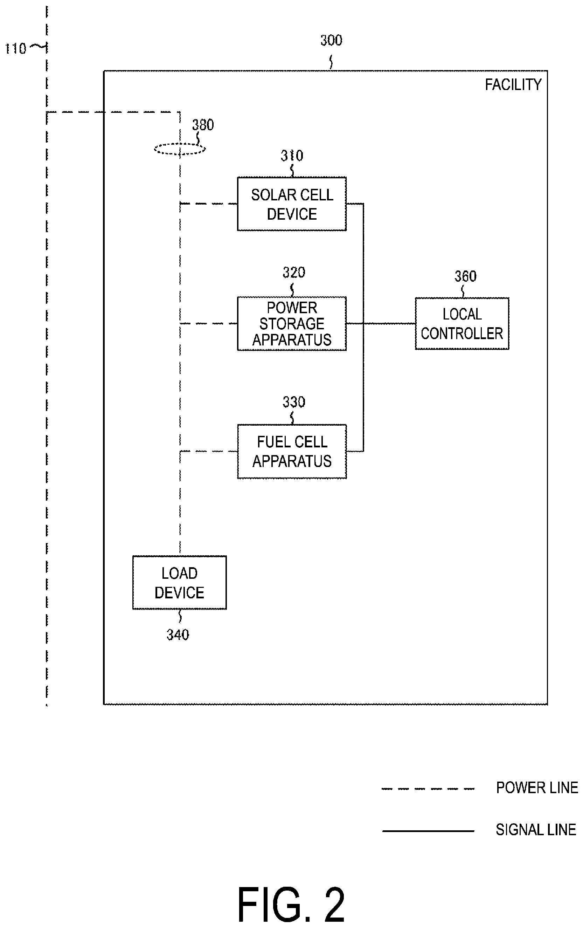

A power management system according to an embodiment will be described below.
As illustrated in FIG. 1, a power management system 100 includes a lower management server 200, facilities 300, and a higher management server 400. In FIG. 1, facilities 300A to 300C are illustrated as examples of the facilities 300.
Each facility 300 is connected to a power grid 110. In the following description, the flow of power from the power grid 110 to the facility 300 is referred to as power flow, and the flow of power from the facility 300 to the power grid 110 is referred to as reverse power flow.
The lower management server 200, the facilities 300, and the higher management server 400 are connected to a network 120. The network 120 provides a line between the lower management server 200 and the facilities 300 and a line between the lower management server 200 and the higher management server 400. The communication network 120 may include the Internet. The network 120 may include a dedicated line such as a virtual private network (VPN).
The lower management server 200 is an example of a power management server that adjusts the supply-demand balance of the power grid 110. The lower management server 200 is a server managed by a business operator, such as a power generation operator, a power transmission and distribution operator, an electricity retailer, or a resource aggregator. The resource aggregator is a power company that supplies the reverse flow power to the power generation operator, the power transmission and distribution operator, the electricity retailer, or the like, in the VPP. The resource aggregator may be a power company that produces reduction power of the flow power (consumed power) of the facility 10 managed by the resource aggregator.
The lower management server 200 transmits, to a local control device 360 provided in the facility 300, a control message instructing control of a distributed power supply (for example, a solar cell apparatus 310, a power storage apparatus 320, or a fuel cell apparatus 330) provided in the facility 300. For example, the lower management server 200 may transmit a power flow control message requesting control of the power flow, or may transmit a reverse power flow control message requesting control of the reverse power flow. Furthermore, the lower management server 200 may transmit a power supply control message for controlling an operating state of the distributed power supply. The degree of control of the power flow or the reverse power flow may be expressed as an absolute value of a difference (for example, a decrease or an increase by XX kW) relative to a target value (for example, XX kW) to be achieved by controlling the flow power or reverse flow power, or relative to a reference value (for example, a baseline power). The degree of control may also be expressed as a relative value of a difference (for example, a decrease or an increase by XX%) relative to the reference value (for example, the baseline power). Alternatively, the degree of control of the flow power or the reverse flow power may be expressed by using two or more levels. The degree of control of the flow power or the reverse flow power may be expressed as a power charge (Real Time Pricing (RTP)) which is determined according to the current power supply-demand balance, or may be expressed as a power charge (Time Of Use (TOU)) which is determined according to the past power supply-demand balance.
The facility 300 includes a solar cell apparatus 310, a power storage apparatus 320, a fuel cell apparatus 330, a load device 340, a local control device 360, and a power meter 380, as illustrated in FIG. 2.
The solar cell apparatus 310 is the distributed power supply that generates power in response to sunlight or other light. The solar cell apparatus 310 may be an example of the distributed power supply to which the feed-in tariff is applied. For example, the solar cell apparatus 310 includes a power conditioning system (PCS) and a solar panel.
The power storage apparatus 320 is the distributed power supply that charges the power and discharges the power. The power storage apparatus 320 may be an example of the distributed power supply to which the feed-in tariff is not applied. For example, the power storage apparatus 320 includes a PCS and a power storage cell.

The fuel cell apparatus 330 is the distributed power supply that generates power using a fuel. The fuel cell apparatus 330 may be an example of the distributed power supply to which the feed-in tariff is not applied. For example, the fuel cell apparatus 330 includes the PCS and the fuel cell.

For example, the fuel cell apparatus 330 may be a solid oxide fuel cell (SOFC), a polymer electrolyte fuel cell (PEFC), a phosphoric acid fuel cell (PAFC), and a molten carbonate fuel cell (MCFC).

The load device 340 is a device that consumes power. For example, the load device 340 is an air conditioning device, an illumination device, an audio visual (AV) device, or the like.

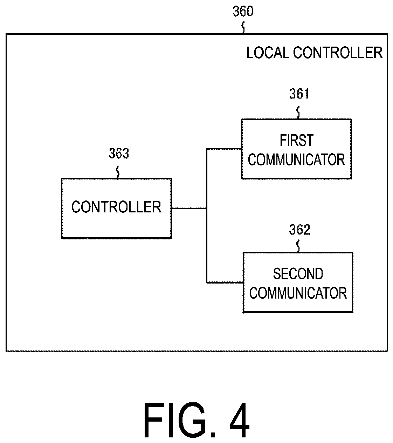

The local control device 360 is an apparatus (EMS: Energy Management System) that manages power of the facility 300. The local control device 360 may control the operating state of the solar cell apparatus 310, the operating state of the power storage apparatus 320, or the operating state of the fuel cell apparatus 330. The details of the local control device 360 will be described later (see FIG. 4).

The power meter 380 is an example of a power meter that measures the power flow from the power grid 110 to the facility 300 and the reverse power flow from the facility 300 to the power grid 110. For example, the power meter 380 is a smart meter that belongs to the higher management server 400.

Each unit time (for example, 30 minutes), the power meter 380 transmits a message including an information element indicating the measurement result for the unit time (the amount of the power flow or the reverse power flow (Wh)) to the local control device 360. The power meters 380 may autonomously transmit the message, or may transmit the message in response to a request of the local control device 360.

The higher management server 400 is an entity that provides infrastructure such as the power grid 110, and may be a server, for example, which is managed by the power generation operator or the power transmission and distribution operator. The higher management server 400 may be a server managed by an aggregator controller that controls the resource aggregator.

The higher management server 400 transmits, to the lower management server 200, an adjustment message requesting adjustment of the supply-demand balance of the power grid 110. The adjustment message may include a message (demand response (DR) message) requesting reduction of the power demand of the power grid. The adjustment message may include a message (output suppression message) requesting reduction of the power supply of the power grid.

In the embodiment, the lower management server 200 communicates with the local control device 360 in accordance with a first protocol. On the other hand, communication between the local control device 360 and the distributed power supply (the solar cell apparatus 310, the power storage apparatus 320, or the fuel cell apparatus 330) is performed in accordance with a second protocol different from the first protocol. For example, as the first protocol, a protocol based on open automated demand response (ADR) or a unique dedicated protocol can be used. For example, as the second protocol, a protocol based on ECHONET Lite, smart energy profile (SEP) 2.0, KNX, or a unique dedicated protocol can be used. For example, both the first protocol and the second protocol may be unique dedicated protocols and are made according to different rules. However, the first protocol and the second protocol may be protocols made according to the same rule.

Lower Management Server

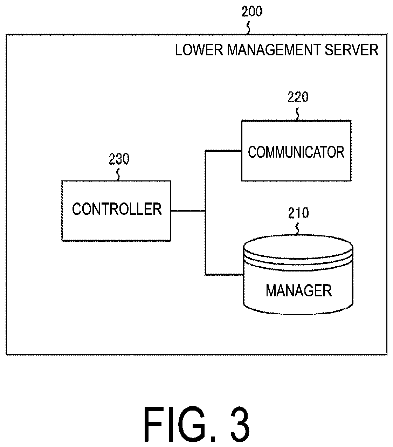

The lower management server according to the embodiment is described below. As illustrated in FIG. 3, the lower management server 200 includes a manager 210, a communicator 220, and a controller 230. The lower management server 200 is an example of a virtual top node (VTN).

The manager 210 includes a storage medium, such as a non-volatile memory and/or an HDD.

For example, the manager 210 manages data related to the facilities 300 managed by the lower management server 200. The facilities 300 managed by the lower management server 200 may be facilities 300 that have entered into a contract with a certain entity that manages the lower management server 200. For example, the data related to the facilities 300 may be demand power supplied from the power grid 110 to the facilities 300 or the power to be reduced in each facility 300 in response to a reduction request (demand response (DR)) of the demand power of the entire power grid 110. The data related to the facilities 300 may be, for example, a type of the distributed power supply (the solar cell apparatus 310, the power storage apparatus 320, or the fuel cell apparatus 330) provided in each facility 300, or specifications of the distributed power supply (the solar cell apparatus 310, the power storage apparatus 320, or the fuel cell apparatus 330) provided in each facility 300. The specifications may be a rated generated power (W) of the solar cell apparatus 310, the maximum output power (W) of the power storage apparatus 320, or the maximum output power (W) of the fuel cell apparatus 330. Furthermore, the data related to the facilities 300 may be the output power that has been instructed to the distributed power supply in the past. For example, the data related to the facilities 300 may be discharging power that has been instructed to the power storage apparatus 320 when the distributed power supply is the power storage apparatus 320. The data related to the facilities 300 may be a degradation degree of the distributed power supply. For example, the data related to the facilities 300 may be a state of health (SOH) of the power storage apparatus 320 when the distributed power supply is the power storage apparatus 320.

The communicator 220 includes a communication module. The communication module may be a wireless communication module compliant with standards such as IEEE 802.11a/b/g/n, ZigBee, Wi-SUN, LTE, 5G, and 6G, or may be a wired communication module compliant with standards such as IEEE 802.3.

The communicator 220 communicates with the local control device 360 via the network 120. As described above, the communicator 220 communicates in accordance with the first protocol. For example, the communicator 220 transmits a first message to the local control device 360 in accordance with the first protocol. The communicator 220 receives the first message response from the local control device 360 in accordance with the first protocol.

For example, the communicator 220 receives, from the facility (for example, the local control device 360 or the power meter 380), a message including an information element indicating the demand power supplied from the power grid 110 to the facility 300. The demand power may be at a value measured by the power meter 380 described above. The demand power may be at a value obtained by excluding the output power of the distributed power supply (the solar cell apparatus 310, the power storage apparatus 320, the fuel cell apparatus 330) from the power consumption of the load device 340.

The controller 230 may include at least one processor. The at least one processor may be constituted by a single integrated circuit (IC) or a plurality of circuits (such as integrated circuits and/or discrete circuits) connected communicatively with each other.

For example, the controller 230 controls each component provided in the lower management server 200. Specifically, the controller 230 transmits the control message to the local control device 360 provided in the facility 300 and instructs control of the distributed power supply (the solar cell apparatus 310, the power storage apparatus 320, or the fuel cell apparatus 330) provided in the facility 300. As described above, the control message may be a power flow control message, may be a reverse power flow control message, or may be a power supply control message.

Local Control Device

A local control device according to an embodiment will be described below. As illustrated in FIG. 4, the local control device 360 includes a first communicator 361, a second communicator 362, and a controller 363. The local control device 360 is an example of a virtual end node (VEN).

The first communicator 361 includes a communication module. The communication module may be a wireless communication module compliant with standards such as IEEE 802.11a/b/g/n, ZigBee, Wi-SUN, LTE, 5G, and 6G, or may be a wired communication module compliant with standards such as IEEE 802.3.

For example, the first communicator 361 communicates with the lower management server 200 via the network 120. As described above, the first communicator 361 communicates in accordance with the first protocol. For example, the first communicator 361 receives a first message from the lower management server 200 in accordance with the first protocol. The first communicator 361 transmits a response to the first message to the lower management server 200 in accordance with the first protocol.

The second communicator 362 includes a communication module. The communication module may be a wireless communication module compliant with standards such as IEEE 802.11a/b/g/n, ZigBee, Wi-SUN, LTE, 5G, and 6G, or may be a wired communication module compliant with standards such as IEEE 802.3.

For example, the second communicator 362 communicates with the distributed power supply (the solar cell apparatus 310, the power storage apparatus 320, or the fuel cell apparatus 330). The second communicator 362 communicates in accordance with the second protocol, as described above. For example, the second communicator 362 transmits the second message to the distributed power supply in accordance with the second protocol. The second communicator 362 receives the second message response from the distributed power supply in accordance with the second protocol.

The controller 363 may include at least one processor. The at least one processor may be constituted by a single integrated circuit (IC) or a plurality of circuits (such as integrated circuits and/or discrete circuits) connected communicatively with each other.

The controller 363 controls components provided in the local control device 360. Specifically, in order to control the power of the facility 300, the controller 363 instructs the device to set an operating state of the distributed power supply by transmitting the second message and receiving the second message response. In order to control the power of the facility 300, the controller 363 may instruct the distributed power supply to report information of the distributed power supply by transmitting the second message and receiving the second message response.

Applicable Scenarios

Applicable scenarios according to the embodiment are described below. In the following, a case in which the lower management server 200 receives an adjustment request of the power supply-demand balance of the power grid 110 from the higher management server 400. In such a case, the lower management server 200 needs to adjust the adjustment-requested power of the entire facilities 300 managed by the lower management server 200. The adjustment-requested power may be the power to be adjusted from the baseline power. The baseline power is the demand power assumed without the adjustment request. The baseline power may be an average value of demand power for a certain period before the advance notice of the adjustment request. The certain period may be determined according to the substance of the negawatt transaction or may be determined between the lower management server 200 and the higher management server 400. The baseline power may be calculated based on a predicted value of the demand power of the facility 300 managed by the lower management server 200, may be calculated based on a predicted value of the generated power of the facility 300 managed by the lower management server 200, or may be calculated based on both the demand power and the generated power. A case where the adjustment request is the reduction request is described below.

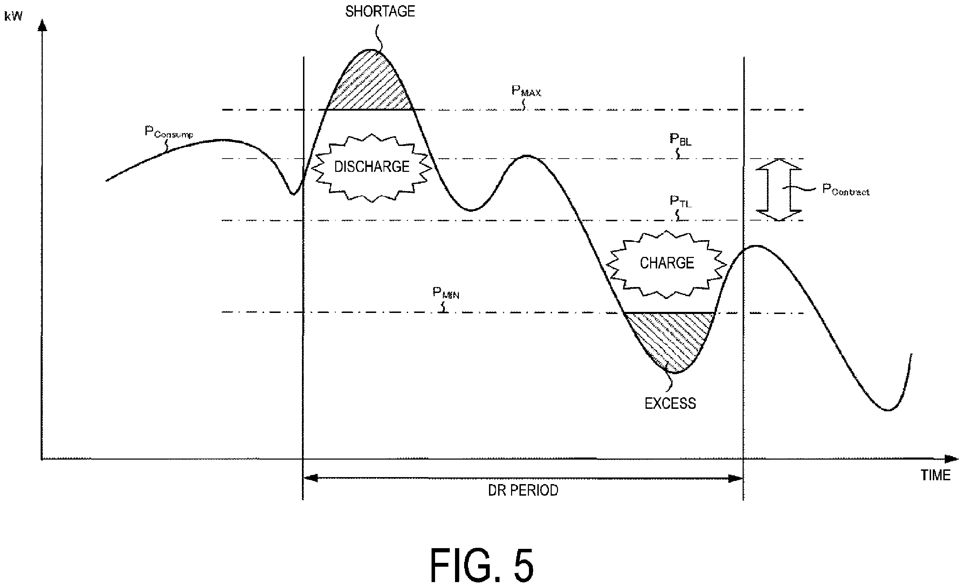

As illustrated in FIG. 5, the power for which adjustment is requested by the higher management server 400 (hereinafter referred to as the adjustment-requested power $P_{Contract}$) is represented as the power to be reduced from the baseline power $P_{BL}$. The adjustment-requested power $P_{Contract}$ may be specified by the higher management server 400, or may be determined by a contract between the lower management server 200 and the higher management server 400. The demand power $P_{Consump}$ of the entire facilities 300 managed by the lower management server 200 varies in the adjustment request period (hereinafter referred to as the DR period) in which the reduction in the demand power is requested.

In this state, the lower management server 200 (the controller 230) adjusts the supply-demand balance of the power grid 110 to which two or more facilities 300 are connected by controlling the power storage apparatus 320 provided in each of the two or more facilities 300. The two or more facilities 300 are the facilities 300 managed by the lower management server 200.

Specifically, the lower management server 200 controls the supply-demand balance of the power grid 110 based on the power (hereinafter referred to as target power $P_{TL}$) which is obtained by excluding the adjustment-requested power $P_{Contract}$ from the baseline power $P_{BL}$. For example, when the demand power $P_{Consump}$ is greater than the target power $P_{TL}$, the power storage apparatus 320 is discharged to bring the demand power $P_{Consump}$ to approach the target power $P_{TL}$. On the other hand, when the demand power $P_{Consump}$ is smaller than the target power $P_{TL}$, the power storage apparatus 320 is charged to bring the demand power $P_{Consump}$ to approach the target power $P_{TL}$. In other words, the difference between the demand power $P_{Consump}$ and the target power $P_{TL}$ is the adjustment power to be adjusted by controlling the power storage apparatus 320.

Here, in the perspective of appropriately controlling the power storage apparatus 320 without delay, it is preferable to apply predetermined processing, which is executed autonomously by the power storage apparatus 320, to the power storage apparatus 320. The autonomous execution of the power storage apparatus 320 may include the control of the power storage apparatus 320 by the local control device 360.

The predetermined processing may include processing for executing the discharge of the power storage apparatus 320 such that the demand power of the facility 300 is the target demand power. The target demand power may be zero or greater than zero. Since the demand power of the facility 300 includes the consumption power of the load device 340, the predetermined processing may be referred to as load following processing.

The predetermined processing may include processing for executing the charge of the power storage apparatus 320 such that the charging power of the power storage apparatus 320 is the target charging power in charging the output power of the distributed power supply to the power storage apparatus 320. The target charging power may be part of the output power of the distributed power supply, or may be the entire output power of the distributed power supply. The distributed power supply used for charging the power storage apparatus 320 may be part of the distributed power supply (for example, the solar cell apparatus 310) provided in the facility 300. For example, the output power of the solar cell apparatus 310 is used for charging the power storage apparatus 320, and the output power of the fuel cell apparatus 330 may be used for charging the power storage apparatus 320. The processing of charging the entire output power of the distributed power supply (for example, the solar cell apparatus 310) to the power storage apparatus 320 may be referred to as full charging processing.

Although not limited, the facility 300 to which the load following processing is applied as the predetermined processing may be the facility 300 that is assumed to generate the flow power. The facility 300 to which the full charging processing is applied as the predetermined processing may be the facility 300 that is assumed to generate the reverse flow power. Whether the power flow or the reverse flow power is generated may be determined based on the demand power of the facility 300, the distributed power supply provided in the facility 300, or the like.

However, the period of time in which the difference between the demand power $P_{Consump}$ and the target power $P_{TL}$ (the adjustment power of the power storage apparatus 320) exceeds an upper limit $P_{MAX}$ of the adjustable power can exist. In such time, a shortage of the reduction power occurs even when the above-described predetermined processing is applied. For example, the upper limit $P_{MAX}$ can be defined by, for example, the maximum discharging power of the power storage apparatus 320. Similarly, the period of time in which the difference between the demand power $P_{Consump}$ and the target power $P_{TL}$ is smaller than a lower limit $P_{MIN}$ of the adjustable power can exist. In such time, an excess of the reduction power occurs even when the above-described predetermined processing is applied. For example, the lower limit $P_{MIN}$ can be defined by, for example, the maximum discharging power of the power storage apparatus 320. In FIG. 5, the upper limit $P_{MAX}$ and the lower limit $P_{MIN}$ of the adjustable power are constant for the sake of explanation, but the upper limit $P_{MAX}$ and the lower limit $P_{MIN}$ of the adjustable power vary depending on the demand power $P_{Consump}$, a remaining power storage amount of the power storage apparatus 320, or the like.

The embodiment introduces processing of sequentially controlling the power storage apparatus 320 by the lower management server 200 (the controller 230) to handle the shortage or excess of the reduction power. The sequential processing is the control for eliminating a shortage error or an excess error at time t+1 or later when the shortage or excess of the reduction power occurs at time t. In the sequential processing, the lower management server 200 may obtain the shortage or excess power from the power storage apparatus 320 and transmit a control message to the power storage apparatus 320 that considers the shortage or excess power (feedback control).

Specifically, the lower management server 200 applies, when the predetermined processing is applied to the power storage apparatus 320 in all of the two or more facilities 300, first processing to one or more facilities 300 included in the two or more facilities 300 when the upper limit $P_{MAX}$ of the adjustable power which is adjustable by controlling the power storage apparatus 320 exceeds the adjustment-requested power. The first processing is an example of processing in which the lower management server 200 sequentially controls the power storage apparatus 320. The first processing may include processing of sequentially controlling the power storage apparatus 320 with a target demand power greater than the target demand power used in the predetermined processing. In such a case, the facility 300 that changes the predetermined processing to the first processing may be selected based on a predetermined criterion so that the adjustment-requested power is ensured after the predetermined processing is changed to the first processing.

Similarly, the lower management server 200 applies, when the predetermined processing to the power storage apparatus 320 in all of the two or more facilities 300, second processing to one or more facilities 300 included in the two or more facilities 300 when the lower limit $P_{MIN}$ of the adjustable power which is adjustable by controlling the power storage apparatus 320 falls below the adjustment-requested power. The second processing is an example of processing in which the lower management server 200 sequentially controls the power storage apparatus 320. The second process may include processing of sequentially controlling the power storage apparatus 320 with a target charging power smaller than the target charging power used in the predetermined processing. In such a case, the facility 300 that changes the predetermined processing to the second processing may be selected based on a predetermined criterion so that the adjustment-requested power is ensured after the predetermined processing is changed to the second processing.

Here, the predetermined criterion is defined so as to minimize the excess power and the shortage power of the entire reduction power supplied to the plurality of facilities 300 from the power grid 110. For example, the predetermined criterion is based on at least one of an absolute amount of the demand power of the facility 300, a variation amount of the demand power of the facility 300, a degradation degree of the power storage apparatus 320, a cost of charging power of the power storage apparatus 320, a type of the power storage apparatus 320, or a type of the device (for example, the load device 340) provided in the facility 300.

(1) Absolute amount of demand power of facility 300

With a large absolute amount of the demand power of the facility 300, it is likely that the excess power or the shortage power occurs. Accordingly, the predetermined criterion may be a criterion for preferentially selecting the facility 300 having the absolute amount of the demand power exceeding a predetermined threshold as the facility 300 to which the first processing or the second process is applied.

(2) Variation amount of demand power of facility 300

With a large variation amount of the demand power of the facility 300, it is likely that the excess power or the shortage power occurs. Accordingly, the predetermined criterion may be a criterion for preferentially selecting the facility 300 having the variation amount of the demand power exceeding a predetermined threshold as the facility 300 to which the first processing or the second processing is applied.

(3) Degradation degree of power storage apparatus 320

To normalize the degradation degree of the power storage apparatus 320, the predetermined criterion may be a criterion for preferentially selecting the facility 300 having the degradation degree of the power storage apparatus 320 smaller than a predetermined threshold as the facility 300 to which the first processing or the second processing is applied. For example, when the degradation degree is the SOH, the higher the SOH, the smaller the degradation degree.

(4) Cost of charging power of power storage apparatus 320

First, upon application of the first processing described above, the output power of the power storage apparatus 320 is suppressed compared to the case in which the predetermined processing is applied. Accordingly, the predetermined criterion may be a criterion for preferentially selecting the facility 300 that includes the power storage apparatus 320 having the cost of the charging power higher than a predetermined threshold as the facility 300 to which the first processing is applied.

Secondly, upon application of the second processing described above, the charging power of the power storage apparatus 320 is suppressed compared to the case in which the predetermined processing is applied. Accordingly, the predetermined criteria may be a criterion for preferentially selecting the facility 300 that includes the power storage apparatus 320 having the cost of the charging power lower than the predetermined threshold as the facility 300 to which the second processing is applied.

Here, the cost of the charging power may be the cost required for charging the power storage apparatus 320. Accordingly, when the power storage apparatus 320 is charged with power from the power grid 110, the cost of the charging power may be determined based on the electricity rate plan with which the facility 300 has entered into a contract for the power supplied from the power grid 110. When the power storage apparatus 320 is charged with the output power of solar cell apparatus 310 or the fuel cell apparatus 330, the cost of the charging power may be determined based on the power generation cost of the solar cell apparatus 310 or the fuel cell apparatus 330. In such a case, the charging and discharging efficiency of the power storage apparatus 320 may be considered.

(5) Type of power storage apparatus 320

The type of the power storage apparatus 320 is, for example, a parameter indicating a characteristic such as the maximum output power of the power storage apparatus 320, the load following characteristic of the power storage apparatus 320, or the like. For example, such a parameter may be a parameter indicating the responsiveness of the output power of the power storage apparatus 320 to the fluctuations in the consumption power of the load device 340. The parameter may be a parameter indicating a transmission delay between the lower management server 200 and the facility 300 (the power storage apparatus 320) in the sequential control.

For example, the predetermined criterion may be a criterion for preferentially selecting the facility 300 that includes the power storage apparatus 320 having the maximum output power smaller than the predetermined threshold as the facility 300 to which the first processing or the second processing is applied. The predetermined criterion may be a criterion for preferentially selecting the facility 300 that includes the power storage apparatus 320 having the load following characteristic better than the predetermined threshold as the facility 300 to which the first processing or the second processing is applied.

(6) Type of device (load device 340 or the like) provided in facility 300

The type of device affects the absolute amount of the demand power of the facility 300 and the variation amount of the demand power of the facility 300. Accordingly, the same concept of the absolute amount of the demand power of the facility 300 and the variation amount of the demand power of the facility 300 may be used to define the predetermined criteria based on the type of device.

Here, the processing for selecting the first processing or the second processing may be performed based on the two or more parameters selected from (1) to (6) described above. The criteria based on two or more parameters may be combined by weighting.

Adjustable Power

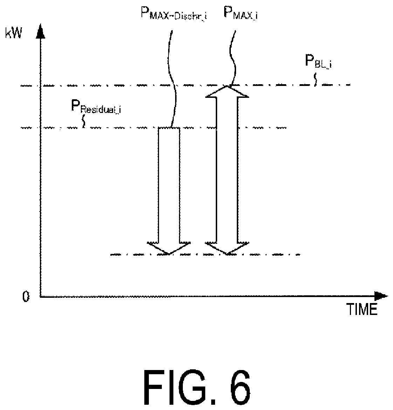

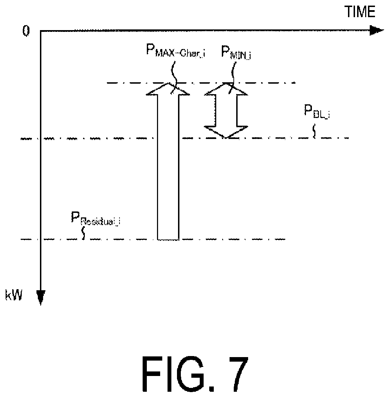

The adjustable power according to the embodiment is described below. In FIG. 6 and FIG. 7, the adjustable power of an individual facility 300 is illustrated. In the following, the demand power of the individual facility 300 is represented by the demand power $P_{Consump\_i}$. When the demand power $P_{Consump\_i}$ is a positive value, the demand power $P_{Consump\_i}$ means the flow power, and when the demand power $P_{Consump\_i}$ is a negative value, the demand power $P_{Consump\_i}$ means the reverse flow power. The baseline power $P_{BL\_i}$ is the baseline power of the facility 300. The baseline power $P_{BL\_i}$ becomes a positive value when the flow power is generated before the DR period, and the baseline power $P_{BL\_i}$ may become a negative value when the reverse flow power is generated before the DR period. A residual demand power $P_{Residual\_i}$ is the demand power of the facility 300 in an assumed case of no discharging or charging of the power storage apparatus 320. In other words, the residual demand power $P_{Residual\_i}$ is a value obtained by excluding the discharging power or charging power from the demand power $P_{Consump\_i}$. The $P_{Residual\_i}$ becomes a positive value when the flow power can be generated in the DR period, and the $P_{Residual\_i}$ becomes a negative value when the reverse flow power can be generated in the DR period. A maximum dischargeable power $P_{MAX\text{-}Dischar\_i}$ is the maximum dischargeable power of the power storage apparatus 320 provided in the facility 300. The maximum dischargeable power $P_{MAX\text{-}Dischar\_i}$ is represented by a positive value, as it may contribute to a decrease of the demand power $P_{Consump\_i}$. A maximum chargeable power $P_{MAX\text{-}Char\_i}$ is the maximum chargeable power of the power storage apparatus 320 provided in the facility 300. The maximum chargeable power $P_{MAX\text{-}Char\_i}$ is represented by a negative value, as it may contribute to an increase of the demand power $P_{Consump\_i}$.

In this state, an upper limit $P_{MAX\_i}$ of the adjustable power of the facility 300 can be defined by the maximum dischargeable power $P_{MAX\text{-}Dischar\_i}$, the baseline power $P_{BL\_i}$, and the residual demand power $P_{Residual\_i}$, as illustrated in FIG. 6. For example, $P_{MAX\_i}$ is represented by the following equation. In such a case, the upper limit of the absolute value of the $P_{MAX\text{-}Dischar\_i}$ may be the absolute value of the $P_{Residual\_i}$. The upper limit $P_{MAX\_i}$ of the adjustable power may be represented as a positive value.

$$P_{MAX\_i} = P_{BL\_i} - P_{Residual\_i} + P_{MAX\text{-}Dischar\_i}$$

However, with no reverse power flow of the output power of the power storage apparatus 320, that is, the power storage apparatus 320 is not discharged, the $P_{MAX\_i}$ may be expressed by the following equation when the residual demand power $P_{Residual\_i}$ is a negative value.

$$P_{MAX\_i} = P_{BL\_i} - P_{Residual\_i} \ (where \ P_{Residual\_i} < 0)$$

On the other hand, a lower limit $P_{MIN\_i}$ of the adjustable power of the facility 300 can be defined by the maximum chargeable power $P_{MAX\text{-}Char\_i}$, the baseline power $P_{BL\_i}$, and the residual demand power $P_{Residual\_i}$, as illustrated in FIG. 7. For example, $P_{MIN\_i}$ is expressed by the following equation. In such a case, the upper limit of the absolute value of the $P_{MAX\text{-}Char\_i}$ may be the absolute value of the $P_{Residual\_i}$. The upper limit $P_{MAX\_i}$ of the adjustable power may be represented as a negative value.

$$P_{MIN\_i} = P_{BL\_i} - P_{Residual\_i} + P_{MAX\text{-}Char\_i}$$

However, when the power of the power grid 110 is not used for charging the power storage apparatus 320, that is, the power storage apparatus 320 is not charged, the $P_{MIN\_i}$ may be expressed by the following equation when the residual demand power $P_{Residual\_i}$ is a positive value.

$$P_{MIN\_i} = P_{BL\_i} - P_{Residual\_i} \ (where \ P_{Residual\_i} > 0)$$

Note that, for the entire facilities 300 managed by the lower management server 200, the upper limit $P_{MAX}$ of the adjustable power is represented by $\Sigma P_{MAX\_i}$, and the lower limit $P_{MIN}$ of the adjustable power is represented by $\Sigma P_{MIN\_i}$.

In the embodiment, the timing of selecting the facility 300 to which the first processing or the second processing is applied may be timing before the start of the DR period or during the DR period. The lower management server 200 may select the facility 300 to which the first processing or the second processing is applied for each predetermined period included in the DR period. The predetermined period may be a period for verifying whether the power has been reduced in response to the reduction request. That is, it is verified whether an accumulated value of the reduction power in the predetermined period is equal to an accumulated value of the adjustment-requested power. Accordingly, an instantaneous shortage or excess of the reduction power may be acceptable within the predetermined period. The predetermined period may be unit time (for example, 30 minutes) in which the measurement result is transmitted from the power meter 380.

Power Management Method

A power management method according to the embodiment will be described below.

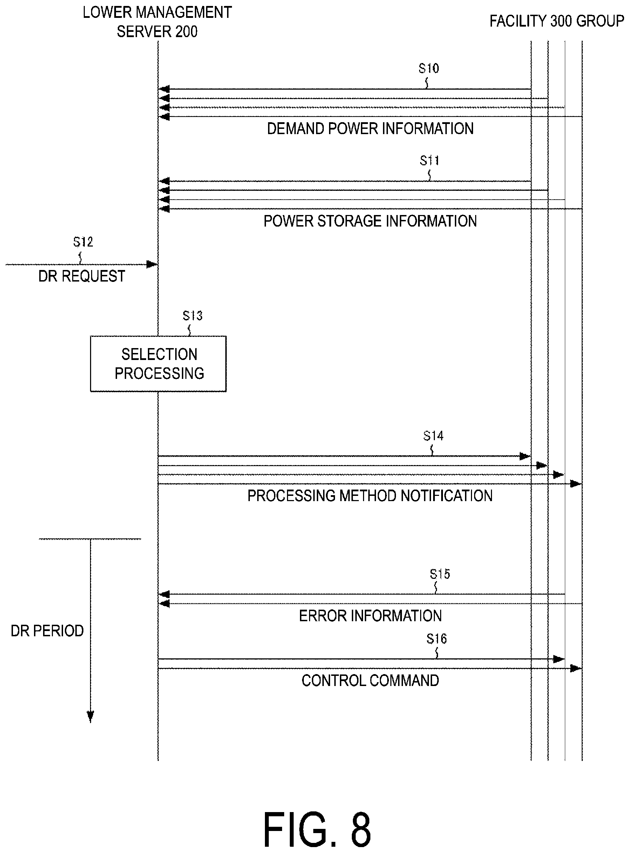

As illustrated in FIG. 8, in step S10, the lower management server 200 receives a message including an information element (demand power information) indicating the demand power of each facility 300. For example, the processing in step S10 is executed every unit time (for example, 30 minutes). Such a structure allows the lower management server 200 to recognize the demand power and the baseline power of each facility 300.

In step S11, the lower management server 200 receives a message including an information element (storage information) related to the power storage apparatus 320 of each facility 300. For example, the processing in step S10 is executed every unit time. The unit time in step S11 may be different from the unit time in step S10. For example, the power storage information may include information indicating the remaining power storage amount of the power storage apparatus 320. The power storage information may include information indicating, for example, the charging or discharging performance of the power storage apparatus 320.

In step S12, the lower management server 200 receives an adjustment request from the higher management server 400. In the illustrated case, the adjustment request is a reduction request (DR request). The reduction request may include an information element for identifying the adjustment-requested power.

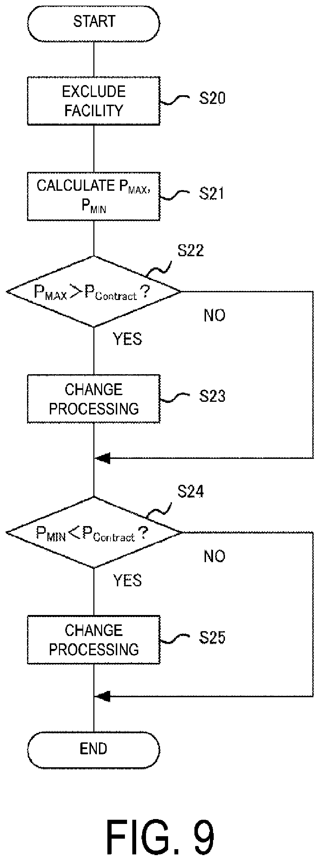

In step S13, the lower management server 200 selects the processing to be applied to the power storage apparatus 320 for the DR period. The lower management server 200 may select the predetermined processing by default and, if necessary, may change the predetermined processing to the first processing or the second processing. Of the facilities 300 managed by the lower management server 200, some facilities 300 may not participate in the reduction request (see FIG. 9).

In step S14, the lower management server 200 transmits a message including an information element (processing method notification) indicating the processing selected in step S13 to each facility 300.

In step S15, the facilities 300 to which the first processing or the second processing is applied transmit a message including an information element (error information) indicating an excess error or a shortage error to the lower management server 200. The processing in step S15 is performed after the start of the DR period.

In step S16, the lower management server 200 transmits a control command for adjusting the excess error or the shortage error based on the error information received in step S15 to the facilities 300 to which the first processing or the second processing is applied.

In a case illustrated in FIG. 8, step S15 and step S16 are repeated for each unit time (feedback processing). The unit time of the feedback processing may be shorter than the unit time for receiving the demand power information or storage information.

An example of step S13 is described. In the illustrated case, the predetermined criterion is based on the absolute amount of the demand power (hereinafter simply referred to as the demand power). The demand power may be a demand power at timing of selecting the first processing or the second processing, or may be the demand power (for example, the baseline power) in the past.

As illustrated in FIG. 9, in step S20, the lower management server 200 excludes a certain facility 300 to which the processing related to the reduction request cannot be applied from the facilities 300 managed by the lower management server 200. An example of such a facility 300 is, for example, the facility 300 that does not include the power storage apparatus 320, the facility 300 that includes the power storage apparatus 320, but it does not have sufficient storage power, or the facility 300 that cannot secure the communication path with the lower management server 200.

In step S21, the lower management server 200 calculates the upper limit $P_{MAX}$ and the lower limit $P_{MIN}$ of the adjustable power.

In step S22, the lower management server 200 determines whether the upper limit $P_{MAX}$ of the adjustable power exceeds the adjustment-requested power $P_{Contract}$. If the determination result is YES, the lower management server 200 executes the processing of step S23. If the determination result is NO, the lower management server 200 executes the processing of step S23.

In step S23, the lower management server 200 changes the predetermined processing to the first processing for one or more facilities 300 included in the two or more facilities 300. The facility 300 to which the first processing is applied is selected based on the above-described predetermined criteria.

In step S24, the lower management server 200 determines whether the lower limit $P_{MIN}$ of the adjustable power falls below the adjustment-requested power $P_{Contract}$. If the determination result is YES, the lower management server 200 executes the processing of step S25. If the determination result is NO, the lower management server 200 ends the processing sequence.

In step S25, the lower management server 200 changes the predetermined processing to the second processing for one or more facilities 300 included in the two or more facilities 300. The facility 300 to which the second process is applied is selected based on the above-described predetermined criteria.

Actions and Effects

In the embodiment, the lower management server 200 changes the predetermined processing to the first processing for the one or more facilities 300 included in the two or more facilities 300 when the upper limit $P_{MAX}$ of the adjustable power exceeds the adjustment-requested power $P_{Contract}$. This structure can suppress the shortage of the adjustment power appropriately by the first processing that sequentially controls the power storage apparatus 320 while suppressing the delay on the assumption that the predetermined processing that is executed autonomously by the power storage apparatus 320 is selected by default.

Similarly, the lower management server 200 changes the predetermined processing to the second processing for the one or more facilities 300 included in the two or more facilities 300 when the lower limit $P_{MIN}$ of the adjustable power falls below the adjustment-requested power $P_{Contract}$. This structure can suppress the excess of the adjustment power appropriately by the second processing that sequentially controls the power storage apparatus 320 while suppressing the delay on the assumption that the predetermined processing that is executed autonomously by the power storage apparatus 320 is selected by default.

As described above, the embodiment can suppress the excess of the adjustment power, as well as the shortage of the adjustment power, thus improving the stable power supply-demand balance of the power grid 110.

Variation 1

A variation 1 of the embodiment is described below. In the following, differences from the embodiment will be mainly described.

In the embodiment, the sequential processing such as the first processing or the second processing is the control of eliminating, for an individual facility 300, a shortage error or an excess error at time t+1 or later upon occurrence of the shortage or excess of the reduction power at time t.

In contrast, in the variation 1, the sequential processing such as the first processing or the second processing is the control of eliminating, for all the facilities 300, the shortage error or the excess error that occurs at time t at time t+1 or later. The interval between time t and time t+1 may be a control cycle of the power storage apparatus 320. The control cycle may be shorter (for example, 1 minute) than a predetermined period.

Specifically, the variation 1 regards, based on the knowledge that the error that occurs in the individual facility 300 basically follows the normal distribution, the error as zero when a specific condition is not satisfied and considers the error when the specific condition is satisfied. The specific condition may be the condition that the adjustment-requested power is out of range of the adjustable power or that a communication error occurs between the lower management server 200 and the facility 300.

First, the lower management server 200 adjusts, at time t+1 or later, the error that has occurred at time t when the adjustment-requested power at time t is out of range of the adjustable power in the first processing and the second processing. Here, when the adjustment-requested power is out of range of the adjustable power, the power corresponding to the adjustment-requested power cannot be compensated by controlling the power storage apparatus 320, and the error increases.

Secondly, the lower management server 200 adjusts, at time t+1 or later, the error that has occurred at time t when the communication error has occurred at time t between the lower management server 200 and the one or more facilities 300 in the first processing and the second processing. Note that once the communication error occurs, the first processing or the second process is not executed appropriately, causing the increase of the error.

On such an assumption, the lower management server 200 adjusts, at time t+1 or later, the error that is a difference between the requested adjustment power requested at time t to the power storage apparatus 320 and the adjustment performance power of the power storage apparatus 320.

For example, the requested adjustment power $P_{Request}$ may be expressed by the following equation using the adjustment power $P_{Adjust}$ of the power storage apparatus 320 and an accumulated error $P_{accum\text{-}err}$. The adjustment power $P_{Adjust}$ is the adjustment power of the power storage apparatus 320 represented by a difference between the demand power $P_{Consump}$ and the target power $P_{TL}$.

[Math. 1]

$$P_{Request} = P_{Adjust} + P_{accum\text{-}err}$$

The accumulated error $P_{accum\text{-}err}$ may be expressed using an error $P_{err}$ at each time by the following equation.

[Math. 2]

$$P_{accum-err} = K_i \sum_{0 \leq t}^{now} P_{err}$$

Where $K_i$ is a constant multiplied by the accumulated error. For example, an overall accumulated error can be eliminated at time t by setting $K_i$ to "1". The accumulated error is not eliminated at time t when $K_i$ is set to "0". By setting $K_i$ to a value between "0" and "1", it is also possible to put the requested adjustment power $P_{Request}$ in the range between $P_{MIN\_t}$ and $P_{MAX\_t}$ at time t.

The error $P_{err}$ at time t may be expressed by the following equation.

[Math. 3]

$$P_{err} = \begin{cases} 0 \; (P_{MIN\_t} \leq P_{Contract} \leq P_{MAX\_t}) \\ P_{Request} - P_{Performance} \; (P_{MIN\_t} > P_{Contract}, \; P_{MAX\_t} < P_{Contract}) \end{cases}$$

Where $P_{MIN\_t}$ is the lower limit of the adjustable power at time t, and $P_{MAX\_t}$ is the upper limit of the adjustable power at time t. The $P_{Request}$ is the requested adjustment power at time t, and $P_{Performance}$ is the adjustment performance power at time t.

As described above, the error $P_{err}$ at time t is included in the accumulated error $P_{accum-err}$, and the accumulated error $P_{accum-err}$ is reflected in the requested adjustment power $P_{Request}$ at time t+1 or later. Accordingly, the error $P_{err}$ that has occurred at time t is adjusted at time t+1 or later. The error $P_{err}$ may be considered to be an error caused by the fact that the adjustment-requested power $P_{Contract}$ is out of range of the adjustment-requested power, or an error caused by the communication error.

Power Management Method

A power management method according to the variation 1 is described below. Here, the handling of the accumulated error $P_{accum-err}$ is described. Therefore, the detailed control of the power storage apparatus 320 is omitted.

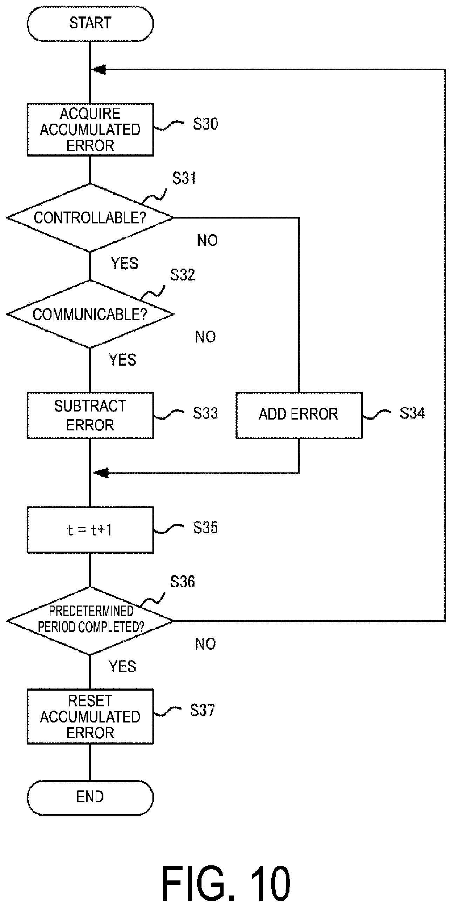

As illustrated in FIG. 10, in step S30, the lower management server 200 acquires the accumulated error $P_{accum-err}$ at time t-1. An initial value of the accumulated error $P_{accum-err}$, that is, the accumulated error $P_{accum-err}$ at time 0 is "0".

In step S31, the lower management server 200 determines whether the adjustment-requested power $P_{Contract}$ is within the range of the adjustable power. If the determination result is YES, the lower management server 200 executes the processing of step S32. If the determination result is NO, the lower management server 200 executes the processing of step S34.

In step S32, the lower management server 200 determines whether the communication is available between the lower management server 200 and the facilities 300. Here, the lower management server 200 may determine whether it is communicable with all of the facilities 300 or with at least one facility 300. If the determination result is YES, the lower management server 200 executes the processing of step S33. If the determination result is NO, the lower management server 200 executes the processing of step S34.

In step S34, the lower management server 200 subtracts the error that is eliminated at time t from the accumulated error $P_{accum-err}$. The error to be eliminated at time t may be a difference between the requested adjustment power $P_{Request}$ at time t-1 and the adjustment performance power $P_{Performance}$ at time t-1. Here, it is assumed that the lower management server 200 recognizes, at time t, the adjustment performance power $P_{Performance}$ at time t-1.

The adjustment performance power $P_{Performance}$ at time t may be the time before time t-2. In such a case, the error to be eliminated at time t may be a difference between the requested adjustment power $P_{Request}$ at the time before time t-2 and the adjustment performance power $P_{Performance}$ at the timer before time t-2.

In step S34, the lower management server 200 adds the error $P_{err}$ that has occurred at time t to the accumulated error $P_{accum-err}$.

In step S35, the lower management server 200 adds "1" to time t. As described above, the interval between time t and time t+1 may be the control cycle of the power storage apparatus 320.

In step S36, the lower management server 200 determines whether a predetermined period has completed. In other words, the lower management server 200 determines whether time t has reached the completion time of the predetermined period. As described above, the predetermined period may be a period for verifying whether the power has been reduced in response to the reduction request. The predetermined period may be unit time (for example, 30 minutes) in which the measurement result is transmitted from the power meter 380. If the determination result is YES, the lower management server 200 executes the processing of step S37. If the determination result is NO, the lower management server 200 returns to the processing of step S30.

In step S37, the lower management server 200 resets the accumulated error $P_{accum\text{-}err}$.

Actions and Effects

In the variation 1, the lower management server 200 considers the error to be zero when the specific condition is not satisfied, and considers the error when the specific condition is satisfied. This structure decreases the communication frequency between the lower management server 200 and the facilities 300 and decreases the processing load of the lower management server 200 and the facilities 300.

Variation 2

A variation 2 of the embodiment will be described below. In the following, differences from the embodiment will be mainly described.

The variation 2 considers the possibility of poor accuracy of the storage information received by the lower management server 200 from the facilities 300. For example, a case of poor accuracy of the remaining power storage amount of the power storage apparatus 320 is considered. The remaining power storage amount of the power storage apparatus 320 may be used to determine the upper limit and the lower limit of the adjustable power of the power storage apparatus 320.

Specifically, the lower management server 200 adjusts, at time t+1 or later, the error that has occurred at time t. The error that has occurred at time t is the difference between an assumed adjustment power of the power storage apparatus 320 and the adjustment performance power of the power storage apparatus 320.

The assumed adjustment power of the power storage apparatus 320 is the power assumed to be adjusted by the power storage apparatus 320 at time t. The assumed adjustment power can be assumed based on the remaining power storage amount of the power storage apparatus 320 acquired at timing before time t-1. The assumed adjustment power may include an assumed discharging power of the power storage apparatus 320 or an assumed charging power of the power storage apparatus 320.

The adjustment performance power of the power storage apparatus 320 is the power adjusted by the power storage apparatus 320 at time t. The adjustment performance power of the power storage apparatus 320 can be identified by the discharge performance or charge performance of the power storage apparatus 320 acquired at time t. The adjustment performance power may include the discharge performance power of the power storage apparatus 320 or the charge performance power of the power storage apparatus 320.

Power Management Method

A power management method according to the variation 2 is described below. Here, the operation of compensating the poor accuracy of the remaining power storage amount is mainly described.

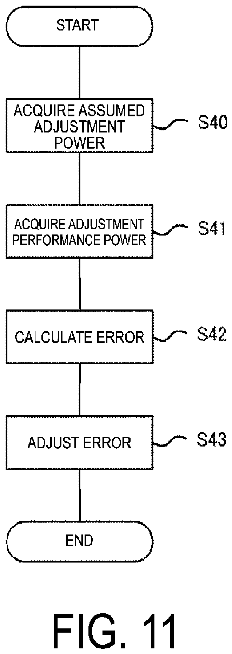

As illustrated in FIG. 11, in step S40, the lower management server 200 acquires the assumed adjustment power of the power storage apparatus 320 at time t. The assumed adjustment power can be acquired based on the remaining power storage amount of the power storage apparatus 320 acquired at timing before time t-1.

In step S41, the lower management server 200 acquires the adjustment performance power of the power storage apparatus 320 at time t. The adjustment performance power can be acquired from the discharge performance or the charge performance of the power storage apparatus 320 acquired at time t.

In step S42, the lower management server 200 calculates the error that is a difference between the assumed adjustment power of the power storage apparatus 320 and the adjustment performance power of the power storage apparatus 320.

In step S43, the lower management server 200 adjusts the error calculated in step S42 at time t+1 or later. The adjustment of the error may include processing of correcting a command value (the magnitude of the discharging power or the charging power) for the power storage apparatus 320 based on the error calculated in step S42. The command value (the magnitude of the discharging power or the charging power) may be regarded as the adjustment power of the power storage apparatus 320. The correction of the remaining power storage amount may be performed based on the error calculated in step S42.

Actions and Effects

In the variation 2, the lower management server 200 adjusts the difference between the assumed adjustment power of the power storage apparatus 320 and the adjustment performance power of the power storage apparatus 320. Such a structure allows the power supply-demand balance of the power grid 110 to be appropriately maintained even with the poor accuracy of the remaining power storage amount of the power storage apparatus 320.

Variation 3

A variation 3 of the embodiment is described below. In the following, differences from the embodiment will be mainly described.

The variation 3 explains the target value of the adjustment power to be adjusted by controlling the power storage apparatus 320. As described above, the target value of the adjustment power is the target power $P_{TL}$ obtained by excluding the adjustment-requested power $P_{Contract}$ from the baseline power $P_{BL}$.

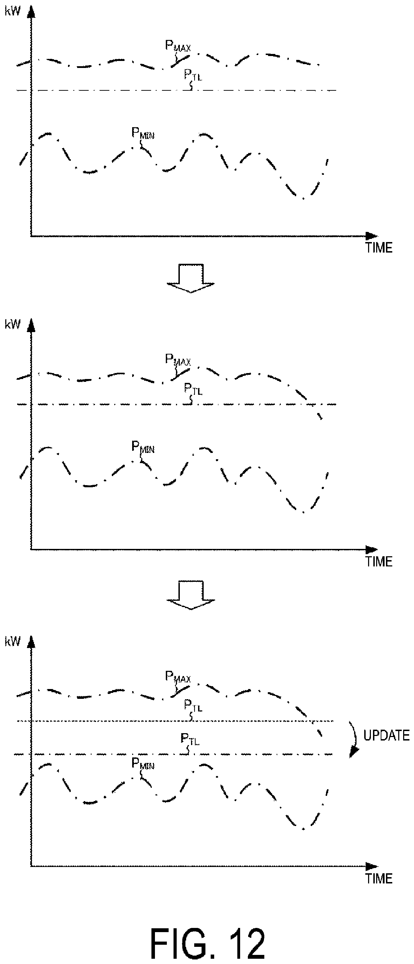

Specifically, as illustrated in the upper row of FIG. 12, the target value of the adjustment power to be adjusted by controlling the power storage apparatus 320 (hereinafter, the target power $P_{TL}$) satisfies the condition that the target value is within the range between a predicted value of the upper limit $P_{MAX}$ of the adjustable power and a predicted value of the lower limit $P_{MIN}$ of the adjustable power. In other words, the lower management server 200 sets the target power $P_{TL}$ between the predicted value of the upper limit $P_{MAX}$ of the adjustable power and the predicted value of the lower limit $P_{MIN}$ of the adjustable power in the initial state. The lower management server 200 may set the target power $P_{TL}$ before the start of the DR period.

The predicted values of the upper limit $P_{MAX}$ and the lower limit $P_{MIN}$ may be predicted based on, for example, the predicted value of the demand power. The predicted value of the demand power may be predicted based on the performance value of the demand power included in the demand power information received from the facility 300. The information indicating the predicted value of the demand power may be included in the demand power information received from the facility 300. In such a case, the facility 300 may predict the predicted value of the demand power.

The predicted value of the upper limit $P_{MAX}$ and the lower limit $P_{MIN}$ may be predicted based on, for example, the predicted value of the remaining power storage amount of the power storage apparatus 320. The predicted value of the remaining power storage amount may be predicted based on the performance value of the remaining power storage amount included in the storage information received from the facility 300. The information indicating the predicted value of the remaining power storage amount may be included in the storage information received from the facility 300. In such a case, the facility 300 may predict the predicted value of the remaining power storage amount.

As illustrated in the middle row of FIG. 12, the variation 3 considers a case in which the target power $P_{TL}$ deviates from the range between the predicted value of the upper limit $P_{MAX}$ and the predicted value of the lower limit $P_{MIN}$ due to the change of the demand power, the remaining power storage amount, or the like. For example, the predicted value of the upper limit $P_{MAX}$ is changed in the middle row of FIG. 12.

In such a case, as illustrated in the lower row of FIG. 12, the lower management server 200 updates the target power $P_{TL}$ based on the changed predicted value upon the change of at least one of the predicted value of the upper limit $P_{MAX}$ of the adjustable power or the predicted value of the lower limit $P_{MIN}$ of the adjustable power. Specifically, the lower management server 200 updates the target power $P_{TL}$ such that it falls between the changed predicted value of the upper limit $P_{MAX}$ and the changed predicted value of the lower limit $P_{MIN}$. The lower management server 200 may update the target power $P_{TL}$ in the DR period.

Here, the target power $P_{TL}$ is a difference between the baseline power $P_{BL}$ and the adjustment-requested power $P_{Contract}$. The baseline power $P_{BL}$ is the value determined by the demand power of the facility 300, and the adjustment-requested power $P_{Contract}$ is the value designated by the higher management server 400. Therefore, the target power $P_{TL}$ is essentially the value uniquely determined from the baseline power $P_{BL}$ and the adjustment-requested power $P_{Contract}$.

However, if the target power $P_{TL}$ is maintained when the target power PTL is expected not to fall within the range between the upper limit $P_{MAX}$ and the lower limit $P_{MIN}$ of the adjustable power, the demand power of the facility 300 managed by the lower management server 200 is out of the target power $P_{TL}$, failing to maintain the power supply-demand balance of the power grid 110.

Accordingly, in the variation 3, the lower management server 200 prioritizes maintenance of the power supply-demand balance of the power grid 110 at the expense of compliance with the adjustment-requested power $P_{Contract}$. Here, the allowable range of the adjustment-requested power $P_{Contract}$ may be determined. In such a case, the lower management server 200 may update the target power $P_{TL}$ such that it falls within the allowable range of the adjustment-requested power $P_{Contract}$.

In this state, the lower management server 200 (the communicator 220) may transmit the set target power $P_{TL}$ to a higher node (for example, the higher management server 400). The lower management server 200 may transmit the set target power $P_{TL}$ before the start of the DR period. Similarly, the lower management server 200 may transmit the updated target power $P_{TL}$ to a higher node (for example, the higher management server 400). The lower management server 200 may transmit the updated target power $P_{TL}$ in the DR period. Since the performance of the power adjusted by controlling the power storage apparatus 320 is reported to the higher node, the transmission of the updated target power $P_{TL}$ may be omitted.

Actions and Effects

In the variation 3, the lower management server 200 updates the target power $P_{TL}$ based on the changed predicted value in response to the change of at least one of the predicted value of the upper limit $P_{MAX}$ of the adjustable power or the predicted value of the lower limit $P_{MIN}$ of the adjustable power. Such a structure allows the power supply-demand balance of the power grid 110 to be appropriately maintained.

Other Embodiments

Although the present disclosure has been described by the above-described embodiment, it is not to be understood that the description and the drawings, which form a part of this disclosure, do not limit this disclosure. Various alternative embodiments, examples, and operational techniques will be apparent from this disclosure to those skilled in the art.

For example, the lower management server 200 may indirectly control the power storage apparatus 320 through the local control device 360. The lower management server 200 may directly control the power storage apparatus 320. The control message for controlling the power storage apparatus 320 may be transmitted through the local control device 360 or not through the local control device 360. The power storage apparatus 320 and the local control device 360 may be considered as the power storage apparatus.

The embodiment has mainly described the reduction request of the flow power. However, the embodiment is not limited to this example. The embodiment may be applied to the reduction request (suppressing the output) of the reverse flow power.

In the embodiment, the lower management server 200 applies the first processing or the second process on the facility 300 basis. However, the embodiment is not limited thereto. The lower management server 200 may apply the first processing or the second processing on the power storage apparatus 320 basis.

Although not particularly mentioned in the embodiment, at least some functions of the local control device 360 may be executed by a server provided on the network 120. In other words, the local control device 360 may be provided by a cloud service.

Although not specifically mentioned in the embodiment, the power may be instantaneous power (kW) or may be an accumulated power amount (kWh) over a certain period (for example, 30 minutes).

**Claims**

1.  A power management server, comprising:

    a controller configured to adjust a power supply-demand balance of a power grid to which two or more facilities are connected by controlling a power storage apparatus provided in each of the two or more facilities, wherein the controller

    applies, when predetermined processing is applied to the power storage apparatus in all of the two or more facilities, first processing to the power storage apparatus in one or more facilities included in the two or more facilities when an upper limit of adjustable power which is adjustable by controlling the power storage apparatus exceeds adjustment-requested power and

    applies, when the predetermined processing is applied to the power storage apparatus in all of the two or more facilities, second processing to the power storage apparatus in the one or more facilities included in the two or more facilities when a lower limit of the adjustable power falls below the adjustment-requested power,

    the predetermined processing is executed autonomously by the power storage apparatus, and

    the first processing and the second processing are processing in which the controller sequentially controls the power storage apparatus.

2.  The power management server according to claim 1, wherein
    in the first processing and the second processing, the controller adjusts, when the adjustment-requested power is out of range of the adjustable power at time t, an error that occurs at the time t at time t+1 or later.

3.  The power management server according to claim 1, wherein
    in the first processing and the second processing, the controller adjusts, when a communication error occurs between the power management server and the one or more facilities at time t, an error that occurs at the time t at time t+1 or later.

4. The power management server according to claim 1, wherein
in the first processing and the second processing, the controller adjusts, at time t+1 or later, an error that is a difference between requested adjustment power required for the power storage apparatus and adjustment performance power of the power storage apparatus at time t.

5. The power management server according to any one of claims 2 to 4, wherein
the controller resets the error that has occurred in a predetermined period according to completion of the predetermined period.

6. The power management server according to any one of claims 1 to 5, wherein

the controller adjusts the error that occurs at time t at time t+1 or later, and
the error is a difference between assumed adjustment power of the power storage apparatus and the adjustment performance power of the power storage apparatus.

7. The power management server according to any one of claims 1 to 6, wherein

the controller
sets a target value of adjustment power to be adjusted by controlling the power storage apparatus between a predicted value of an upper limit of the adjustable power and a predicted value of a lower limit of the adjustable power and
updates, when at least one of the predicted value of the upper limit of the adjustable power or the predicted value of the lower limit of the adjustable power is changed, the target value of the adjustment power based on a changed predicted value.

8. The power management server according to claim 7, wherein

the controller
sets the target value of the adjustment power before a start of an adjustment request period and
updates the target value of the adjustment power after the start of the adjustment request period.

9. The power management server according to claim 7 or 8, further comprising
a transmitter configured to transmit the target value of the adjustment power set by the controller to a higher node.

10. A power management method, comprising

adjusting, by a power management server, a power supply-demand balance of a power grid to which two or more facilities are connected by controlling a power storage apparatus provided in each of two or more facilities, the adjusting comprising:

applying, when predetermined processing is applied to the power storage apparatus in all of the two or more facilities, first processing to the power storage apparatus in one or more facilities included in the two or more facilities when an upper limit of adjustable power which is adjustable by controlling the power storage apparatus exceeds adjustment-requested power; and
applying, when the predetermined processing is applied to the power storage apparatus in all of the two or more facilities, second processing to the power storage apparatus in the one or more facilities included in the two or more facilities when a lower limit of the adjustable power falls below the adjustment-requested power, wherein
the predetermined processing is executed autonomously by the power storage apparatus, and
the first processing and the second processing are processing in which the power management server sequentially controls the power storage apparatus.

FIG. 1

300A(300)

FACILITY

300B(300)

FACILITY

300C(300)

FACILITY

110

100

120

200

LOWER
MANAGEMENT
SERVER

400

HIGHER
MANAGEMENT
SERVER

400

- - - - - - POWER LINE

─────── SIGNAL LINE

EP 4 191 813 A1

FIG. 2

200

LOWER MANAGEMENT SERVER

220

COMMUNICATOR

230

CONTROLLER

210

MANAGER

# FIG. 3

360

LOCAL CONTROLLER

361

FIRST
COMMUNICATOR

363

CONTROLLER

362

SECOND
COMMUNICATOR

# FIG. 4

FIG. 5

# FIG. 6

FIG. 7

LOWER MANAGEMENT
SERVER 200

FACILITY 300 GROUP

S10

DEMAND POWER INFORMATION

S11

POWER STORAGE INFORMATION

S12

DR REQUEST

S13

SELECTION
PROCESSING

S14

PROCESSING METHOD NOTIFICATION

S15

ERROR INFORMATION

S16

DR PERIOD

CONTROL COMMAND

FIG. 8

FIG. 9

START

ACQUIRE
ACCUMULATED
ERROR — S30

S31

CONTROLLABLE? — NO

YES

S32

COMMUNICABLE? — NO

YES

SUBTRACT
ERROR — S33          ADD ERROR — S34

t = t+1 — S35

S36

PREDETERMINED
PERIOD COMPLETED? — NO

YES

RESET
ACCUMULATED
ERROR — S37

END

# FIG. 10

START

ACQUIRE ASSUMED
ADJUSTMENT
POWER — S40

ACQUIRE ADJUSTMENT
PERFORMANCE POWER — S41

CALCULATE ERROR — S42

ADJUST ERROR — S43

END

# FIG. 11

FIG. 12

<table>
<tr><td colspan="2" align="center">**INTERNATIONAL SEARCH REPORT**</td><td>International application No.<br>PCT/JP2021/025841</td></tr>
</table>

| A. CLASSIFICATION OF SUBJECT MATTER |
|---|
| Int.Cl. H02J3/32(2006.01)i, H02J3/38(2006.01)i, H02J13/00(2006.01)i |
| According to International Patent Classification (IPC) or to both national classification and IPC |

| B. FIELDS SEARCHED |
|---|
| Minimum documentation searched (classification system followed by classification symbols)<br>Int.Cl. H02J3/32, H02J3/38, H02J13/00 |
| Documentation searched other than minimum documentation to the extent that such documents are included in the fields searched<br>Published examined utility model applications of Japan 1922-1996<br>Published unexamined utility model applications of Japan 1971-2021<br>Registered utility model specifications of Japan 1996-2021<br>Published registered utility model applications of Japan 1994-2021 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | WO 2020/017428 A1 (KYOCERA CORPORATION) 23 January 2020 (2020-01-23), whole document | 1-10 |
| A | WO 2019/17435 A1 (KYOCERA CORPORATION) 06 June 2019 (2019-06-06), whole document | 1-10 |
| A | WO 2015/129734 A1 (SUMITOMO ELECTRIC INDUSTRIES, LTD.) 03 September 2015 (2015-09-03), whole document | 1-10 |
| A | WO 2013/046656 A1 (SANYO ELECTRIC CO., LTD.) 04 April 2013 (2013-04-04), whole document | 1-10 |
| A | WO 2017/037974 A1 (DENSO CORPORATION) 09 March 2017 (2017-03-09), whole document | 1-10 |
| A | JP 2016-171609 A (EPUKO KK) 23 September 2016 (2016-09-23), whole document | 1-10 |

☐ Further documents are listed in the continuation of Box C.    ☒ See patent family annex.

| | | |
|---|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>25 August 2021 | Date of mailing of the international search report<br>07 September 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

Information on patent family members

International application No.

PCT/JP2021/025841

```
WO 2020/017428 A1   23 January 2020      (Family: none)

WO 2019/17435 A1    06 June 2019         JP 6928670 B2
                                         whole document
                                         TW 201908241 A
                                         whole document
                                         US 2020/387982 A1
                                         whole document

WO 2015/129734 A1   03 September 2015    US 2016/0344189 A1
                                         whole document
                                         US 10170915 B2
                                         whole document

WO 2013/046656 A1   04 April 2013        JP 2014-233096 A
                                         whole document
                                         JP 2014-233097 A
                                         whole document

WO 2017/037974 A1   09 March 2017        JP 2017-50907 A
                                         whole document
                                         JP 6356643 B2
                                         whole document

JP 2016-171609 A    23 September 2016    JP 6069738 B2
                                         whole document
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019107435 A